# EUROPEAN PATENT APPLICATION

(11) **EP 0 547 222 A1**
(43) Date of publication of application: **23.06.1993**
(21) Application number: 91914616.7
(22) Date of filing: 20.08.1991
(51) Int. Cl.: G06F 15/38

(54) **SYSTEM FOR SYNTAX ANALYSIS OF JAPANESE LANGUAGE**

(30) Priority: 20.08.1990 JP 218561/90; 19.09.1990 JP 249395/90; 15.10.1990 JP 275770/90; 20.11.1990 JP 315228/90
(71) Applicant: KABUSHIKI KAISHA CSK, Shinjuku-ku Tokyo 163 (JP)
(72) Inventor: TAKAGI, Akira, 6-30, Nukuiminami-cho 3-chome, Tokyo 184 (JP); WATANABE, Rumi, 65-2, Minamidai 4-chome, Tokyo 164 (JP); YOSHIHARA, Shinji, 75-1, Kanamori, Tokyo 194 (JP)
(74) Representative: Lorenz, Werner, Dipl.-Ing.
(86) International application number: JP9101108
(87) International publication number: WO9203796

(57) **Abstract**

A system for syntax analysis of Japanese language comprises a local syntax analyzing unit (3) which determines implications among the words and forms an analytical tree which indicates implications among the words, and a generic syntax analyzing unit (4) which, when a Japanese sentence indicated by the analytical tree formed by the local syntax analyzing unit (3) is a complex sentence, determines the warrantability of a portion to where a postpositional word functioning as an auxiliary to a main word is implicated depending on the syntax information of the above words, meaning information, and predetermined analytical rules based on the structural features of the above Japanese language, and corrects the analytical tree as required. The system is capable of automatically analyzing the implicating structures of complex sentences in the Japanese language, and helps reduce the laborious work of decomposing complex sentence into simple sentences through human hand.

## Description

### [Technical Field]

The present invention relates system for syntax analysis of Japanese language for the machine-aided analysis of "modifying-modified" structure in Japanese sentences.

### [Background Art]

In conventionally performing syntax analysis for Japanese language, each Japanese sentence has been divided into individual words so that phrase structure and modifying-modified relation are extracted using as a clue grammatical information possessed by each word such as of a part of speech and semantic restriction information for judging the possibility of being modified by other words.

It should be noted that, while in the followings a description with respect to syntax analysis is given on the premise that the analysis of modifying-modified relation is performed for each word rather than for each clause for reasons, for example, of possible simplification of control algorithm, the following description is applicable in a similar manner to cases of using modifying-modified analysis among clauses and/or analysis based on context-independent grammar. Further, in association with the fact that analysis of modifying-modified relation is performed with respect to each word, the meaning of "modify", "modification", "modifying-modified relation" and the like is used in an extended manner as in "a word modifies another word".

Since, here, those words which belong to such parts of speech as noun, adjective, verb, adverb usually have strong semantic restriction with respect to modification on one another, the semantic range of those words which are possibly its modifiers may be defined in the items of each word dictionary. Judgment with respect to modifying-modified relation is often possible, therefore, among the words belonging to these parts of speech by a method in which the word dictionary as described above is looked up and the judgment is made on the basis of semantic restriction of each word itself.

Noun-phrase-forming particle or case particle by itself, on the other hand, has no semantic restriction on modification with other words, while it is capable of being modified by any noun and the words possibly modified by it cannot be directly regulated on the basis of semantic restriction existing between itself and the other unit. Judgment on modifying-modified relation and extraction of phrase structure related to these particles are performed, therefore, by noticing semantic restriction existing between a noun and another noun interposed by the particle (in the case of noun-phrase-forming particle) or between a noun and a verb (in the case of case particle) instead of noticing that of the particle itself.

An accurate analysis based only on such semantic restriction, however, is difficult to be conducted with respect to such words as a subjective case particle which, though qualified to modify predicate occurring subsequently for the first time in a complex sentence, often exists without a modifying effect thereon.

Furthermore, for the case of a conjunctive particle, even the relationship based on semantic restriction between a predicate and another predicate existing in a manner interposed by it cannot be described by simple semantic data such as semantic feature.

The currently used analyzing techniques, therefore, have been without an effective means for analysis and a proper analysis has been impossible in judging the modifying-modified relation of conjunctive particle or subjective case particle as described above, for example, in a complex sentence containing a plurality of subordinate clauses and/or substantive-modifying clause connected by conjunctions. (Here, a substantive-modifying clause refers to a clause which modifies a noun and may be classified for example into subjective case substantive-modifying clause and accusative case substantive-modifying clause. Further, a complex sentence refers to a sentence containing subordinate clause, where a subordinate clause may be one without a subject.) A previous processing is therefore necessary, in which breaking down of a complex sentence into relatively shorter parts is effected by a human factor or in which a person designates the words to be modified by conjunctive particle or case particle --- these points being an obstruction in the automatic analysis of Japanese language.

For these reasons, a method is currently considered, in which possible logical relation, modifying relation or past examples between propositions or between case component and predicate are stored as knowledge using knowledge base or case base so that it is used in judging the modifying-modified relation of the above described conjunctive particle or subjective case particle. Since, however, such knowledge base or case base is usually of a considerably large size and, accordingly, utilization method of such knowledge becomes less easier, much difficulty is anticipated before its practical use.

As has been described, the conventional analyzing method of Japanese language has been unable to provide an accurate analysis on modifying-modified relation of conjunctive particle or case particle in a complex sentence. There has been therefore a problem that a complex sentence is to be separated into shorter parts by a human factor or that a person is to designate the modificand of conjunctive particle or case particle.

Furthermore, a method in which logical relationship or the like between propositions is stored using a knowledge base or case base has a disadvantage that it is not practical for example because these bases are of considerably large size.

It is an object of the present invention to eliminate the above described problems by providing a system for syntax analysis of Japanese language in which a Japanese complex sentence may be efficiently subjected to an automatic analysis without a human factor.

### [Disclosure of the Invention]

To achieve the above described object, in a system for syntax analysis of Japanese language to which Japanese sentences processed with morphemic analysis are inputted for performing syntax analysis to judge modifying-modified structure of the Japanese sentence, the present invention comprises: a local syntax analysis unit for forming an analyzing tree representing the modifying-modified relation between the words by judging the modifying-modified relation between the words in accordance with predetermined analyzing rules using syntactic information and semantic information obtained from the morpheme analysis processing; and a global syntax analysis unit for correcting the analyzing tree, as necessary, when the Japanese sentence represented by the analyzing tree formed by said local syntax analysis unit is a complex sentence, by judging in accordance with predetermined analyzing rules based on syntactic information and semantic information of the words and structural feature of the Japanese sentence with respect to justification of the modificand of a conjunctive particle and "wa", "ga", "niwa", "dewa" that follows a noun among the modifying-modified relations between the words determined by said local syntax analysis unit, whereby the modifying-modified structure in a Japanese complex sentence may automatically be analyzed. Further, time and labor that are conventionally necessary for processing in which a complex sentence is divided into simple sentences by means of a human factor is reduced.

Further, there is an advantage that, by judging the justification of modificand of conjunctive particle and case particle in accordance with analyzing rules based on syntactic information and semantic information of words and the structural feature of a Japanese complex sentence, the global syntax analysis unit is able to perform an accurate analysis on a Japanese sentence with a higher accuracy than cases such as of storing possible logical relations between predicates in a knowledge base.

In considering the analyzing efficiency, what is to be analyzed in the global syntax analysis unit may be limited to cases where the Japanese sentence represented by the analyzing tree representing the modifying-modified relation, formed by the local syntax analysis unit falls under one of the following four patterns: (1) a complex sentence having at least two subordinate clauses that are connected by conjunctive particle; (2) a complex sentence having a substantive-modifying clause occurring later than a conjunctive particle; (3) a complex sentence having a plurality of clauses, other than substantive-modifying clause, occurring later than "wa", "ga", "niwa", "dewa" that follows a noun; and (4) a complex sentence having a substantive-modifying clause occurring later than "wa", "ga", "niwa", "dewa" that follows a noun. By performing the analysis in the global syntax analysis unit in a limited manner as described, there is an advantage that the global syntax analysis unit does not start for such as a Japanese complex sentence in which modifying-modified relation is apparent so that analyzing process of a Japanese sentence may be performed even more efficiently and accurately.

As the global syntax analysis unit for performing analysis corresponding to the patterns of Japanese complex sentences as described above, firstly, there is one in which, for a Japanese sentence having at least two subordinate clauses connected by a conjunctive particle, the modificand of the conjunctive particle in the Japanese sentence is judged on the basis of type of conjunctive particle or of the community of subject for the predicates.

Secondly, there is one in which, for a Japanese sentence having a substantive-modifying clause occurring later than a conjunctive particle, the modificand of the conjunctive particle in the Japanese sentence is determined on the basis of type of the conjunctive particle, type of the substantive-modifying clause, type of case particle modifying pertinent predicate, sharability of the noun to be modified by the substantive-modifying clause, or the community of the subject for the predicates.

In the third place, there is one in which, for a Japanese sentence having at least two subordinate clauses connected by conjunctive particle, the modificand of the conjunctive particle in the Japanese sentence is determined on the basis of type of conjunctive particle or the community of subject for the predicates, and, for a Japanese sentence having a substantive-modifying clause occurring later than a conjunctive particle, the modificand of the conjunctive particle in the Japanese sentence is determined on the basis of type of the conjunctive particle, type of the substantive-modifying clause, type of case particle modifying pertinent predicate, the sharability of the noun to be modified by the substantive-modifying clause, or the community of subject for the predicates.

In the fourth place, there is one in which, for a Japanese sentence having a plurality of clauses other than substantive-modifying clause occurring later than "wa", "ga", "niwa", "dewa" that follows a noun, the modificand of "wa", "ga", "niwa", "dewa" in the Japanese sentence is determined on the basis of type of particle that follows said noun, type of conjunctive particle, or the community of subject for the predicates.

In the fifth place, there is one in which, for a Japanese sentence having at least two subordinate clauses connected by conjunctive particle, the modificand of the conjunctive particle in the Japanese sentence is determined on the basis of type of the conjunctive particle or the community of subject for the predicates, and, for a Japanese sentence having a plurality of clauses other than substantive-modifying clause occurring later than "wa", "ga", "niwa", "dewa" that follows a noun, the modificand of "wa", "ga", "niwa", "dewa" in the Japanese sentence is determined on the basis of type of the particle that follows said noun, type of conjunctive particle, or the community of subject for the predicates.

In the sixth place, there is one in which, for a Japanese sentence having a substantive-modifying clause occurring later than a conjunctive particle, the modificand of the conjunctive particle in the Japanese sentence is determined on the basis of type of the conjunctive particle, type of the substantive-modifying clause, type of case particle modifying pertinent predicate, the sharability of the noun to be modified by the substantive-modifying clause, or the community of subject for the predicates, and, for a Japanese sentence having a plurality of clauses other than substantive clause occurring later than "wa", "ga", "niwa", "dewa" that follows a noun, the modificand of "wa", "ga", "niwa", "dewa" in the Japanese sentence is determined on the basis of type of particle that follows said noun, type of conjunctive particle, or the community of subject for the predicates.

In the seventh place, there is one in which, for a Japanese sentence having at least two subordinates connected by conjunctive particle, the modificand of the conjunctive particle in the Japanese sentence is determined on the basis of type of the conjunctive particle, or the community of subject for the predicates, and, for a Japanese sentence having a substantive-modifying clause occurring later than conjunctive particle, the modificand of the conjunctive particle in the Japanese sentence is determined on the basis of type of the conjunctive particle, type of the substantive-modifying clause, type of case particle modifying pertinent predicate, the sharability of the noun to be modified by the substantive-modifying clause, or the community of subject for the predicates, and, for a Japanese sentence having a plurality of clauses other than substantive-modifying clause occurring later than "wa", "ga", "niwa", "dewa" that follows a noun, the modificand of "wa", "ga", "niwa", "dewa" in the Japanese sentence is determined on the basis of type of particle that follows said noun, type of conjunctive particle, or the community of subject for the predicates.

In the eighth place, there is one in which, for a Japanese sentence having a substantive-modifying clause occurring later than "wa", "ga", "niwa", "dewa" that follows a noun, the modificand of "wa", "ga", "niwa", "dewa" in the Japanese sentence is determined on the basis of type of particle that follows said noun, type of the substantive-modifying clause, or the community of subject for the predicates.

### [Brief Description of the Drawings]

Fig.1 is a functional block diagram showing an embodiment of a system for syntax analysis of Japanese language according to the present invention;
Fig.2 shows the content of a Japanese language dictionary;
Fig.3 shows the content of a matrix table of parts of speech; and
Fig.4 to Fig.13 illustrate analyzing process of Japanese sentence according to the present embodiment.

### [The Best Mode for Carrying Out the Invention]

An embodiment of the present invention will now be described in detail with reference to the drawings.

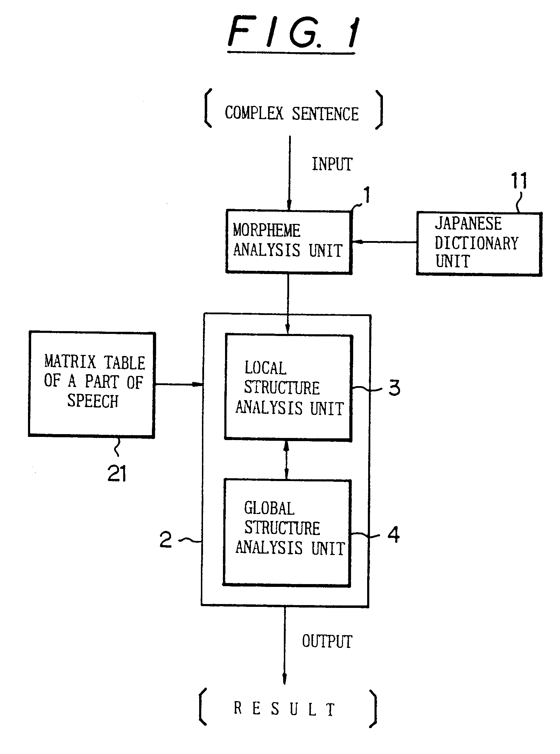

Fig.1 shows a functional block diagram of a system for syntax analysis of Japanese language according to the present invention.

The Japanese language syntax analysis system of the present embodiment has analytical processing unit 2, and a Japanese dictionary unit 11 and a part of speech matrix table 21 serving together as a data storage unit. It is to receive a Japanese sentence which has been subjected to morphemic analysis at a morpheme analysis unit 1 to perform structure analysis.

The above described morpheme analysis unit 1 performs morphemic analysis processing in which the input Japanese sentence is separated word by word and each of the words is provided with grammatical information and semantic information possessed by that word.

The analysis processing unit 2 comprises a local structure analysis unit 3 and a global structure analysis unit 4.

The local structure analysis unit 3 performs syntax analysis processing in which the modifying-modified relation of one word to another is judged in accordance with analyzing rule using the grammatical information and semantic information of each word obtained by the morphemic analysis as described above so as to form a tree diagram representing the modifying-modified relation between the words.

The global structure analysis unit 4 analyzes the tree diagram as described above when the Japanese sentence to be analyzed constitutes a complex sentence, and judges the justification of the modificand of conjunctive particle and "wa", "ga", "niwa" "dewa" that follows a noun in the above described Japanese complex sentence in accordance with predetermined rules based on grammatical information and semantic information of the words and the structural feature of complex sentence of Japanese language so as to correct the above described tree diagram.

It should be noted that, in the present embodiment, all of one that appears as an individual case particle (such as "ga"), one that exists as an individual adverbial particle but signifies a case relation (such as "wa" in "Kono keiki wa oishii"), and a case particle followed by an adverbial particle ( such as "niwa") are generally referred to as case particle to avoid intricacy in the followings. Further, a subjective case particle refers to "wa", "ga" of the above described case particles which signify a subjective case.

Among the rules for judging the justification of the modificand of the above described conjunctive particles, subjective case particles and such as "niwa", "dewa" are: a rule based on semantic relation of one conjunctive particle to another which are modified by each predicate; a rule related to the modifying-modified relation existing between a conjunctive particle and a substantive-modifying clause; a rule related to the modifying-modified relation existing between case particle "wa", "ga", "niwa", "dewa" and a substantive-modifying clause; and a rule related to the community of subject with respect to predicates.

It should be noted that, of Japanese complex sentences, the following four types are subjected in the present embodiment to global structural analysis: (1) a complex sentence having at least two subordinate clauses connected by conjunctive particle; (2) a complex sentence having a substantive-modifying clause occurring later than a conjunctive particle; (3) a complex sentence having a plurality of clauses other than substantive-modifying clause occurring later than "wa", "ga", "niwa", "dewa" that follows a noun; and (4) a complex sentence having a substantive-modifying clause occurring later than "wa", "ga", "niwa", "dewa" that follows a noun. That is, when the Japanese sentence represented by local tree diagram formed by the local structure analysis unit 3 falls under one of the above described four patterns, the global structure analysis unit 4 performs analysis and correction of the above described tree diagram on the basis of an analytical processing specified for each pattern of the complex sentences. The four patterns of Japanese complex sentence will now be diagrammatically illustrated. For the purpose of simplification, in the followings, in addition to predicates, auxiliary verbs and equivalent phrases suffixing thereto are inclusively referred to as predicates.

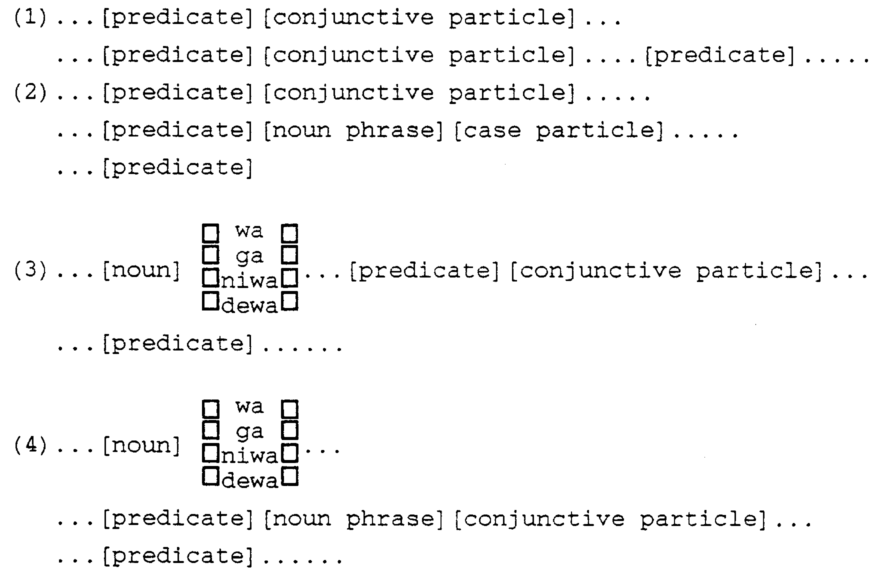

The content of each processing will now be described in detail by way of several concrete examples of analytical processing.

### (First Example of Analytical Processing)

In a first processing example, a description will be given to a case where a Japanese complex sentence "Kare wa joobuna ibukuro o motteite, shokuji ga dasareruto perotto tabete shimatta" is analytically processed. This exemplary sentence falls under the first pattern among the patterns as described of Japanese complex sentence.

This exemplary sentence will be broken down into as follows.
Kare/wa/joobuna/ibukuro/o/motteiru/te/shokuji/ga/dasareru/ to/perotto/tabeteshimatta. Here, while "dasareru", "tabeteshimatta", "warukatta" and the like in fact represents a plurality of morphemes, they are each treated simply as a single morpheme and are abbreviated such as verb, adjective, predicate, because they are not relevant to the discussion.

Further, in the present embodiment, a conventionally used method such as "saichoitchiho" may be used as it is in the morpheme analytical processing at the morpheme analysis unit 1.

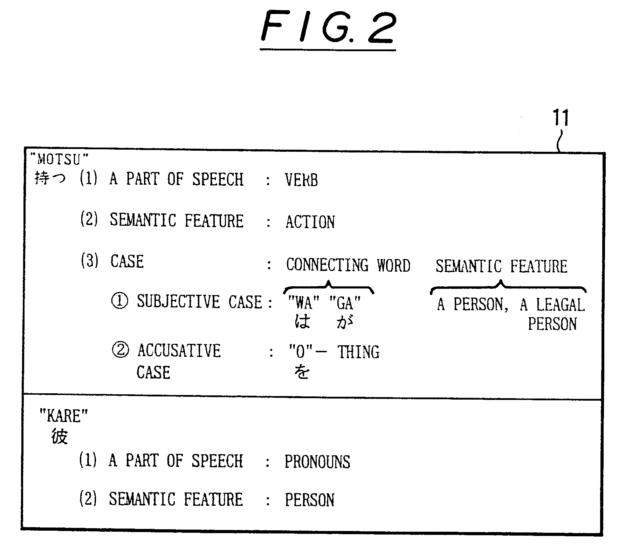

Here, as shown in Fig.2, grammatical information and semantic information such as part of speech, semantic feature, case of each word are registered in the Japanese dictionary unit 11 of this apparatus. However, morphemic informations that are necessary for morphemic analysis are omitted. Grammatical information and semantic information of each word are given to each separated word from the above described Japanese dictionary unit 11 by means of morpheme analytical processing, so that they are passed to the next structure analytical processing at the local structure analysis unit 3. While processing for such structure analysis may be performed on the basis of a context-independent grammar as is conventionally performed, a method based on the modifying-modified analysis will be described in the followings.

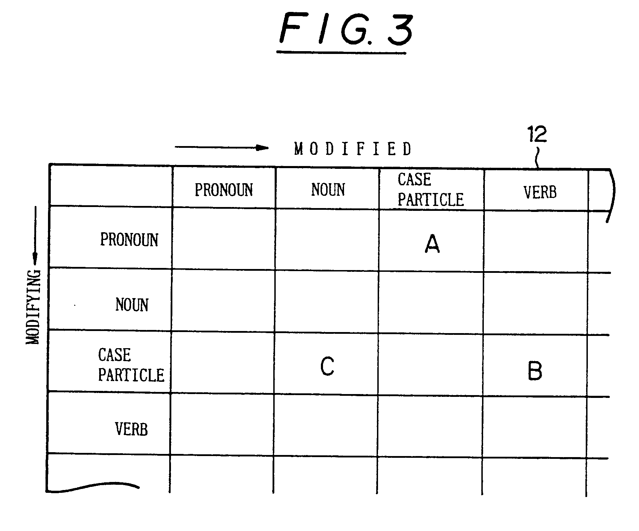

In structure analytical processing at the local structure analysis unit 3, the words obtained from the breaking down as described are first extracted two words at a time so as to determine modifying-modified relation thereof. Such determination of modifying-modified relation is performed on the basis of a part of speech matrix table 21 describing analyzing rules as shown in Fig.3 in accordance with each combination of the parts of speech of the words modifying and modified. That is, a rule corresponding to the combination of the two extracted words with respect to each other is obtained from the part of speech matrix table 21 so as to determine if a modifying-modified relation exists. In the part of speech matrix table 21, a rule for determining if modifying-modified relation is possible between the words corresponding to each part of speech is set for each combination of parts of speech. Note that the two words are selected in order starting from the head of the sentence. This is because, in Japanese language, a word occurring later in a sentence, in principle, does not modify a preceding word.

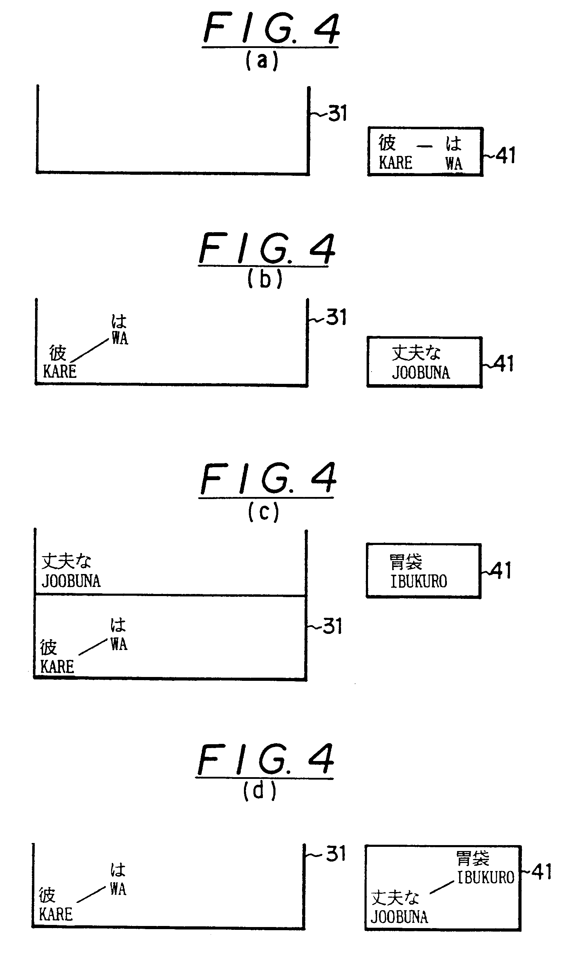

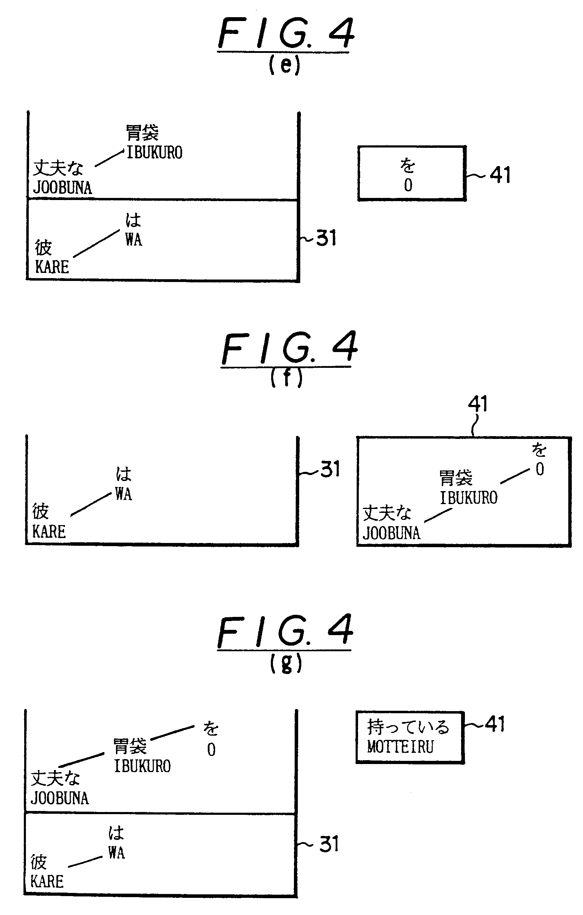

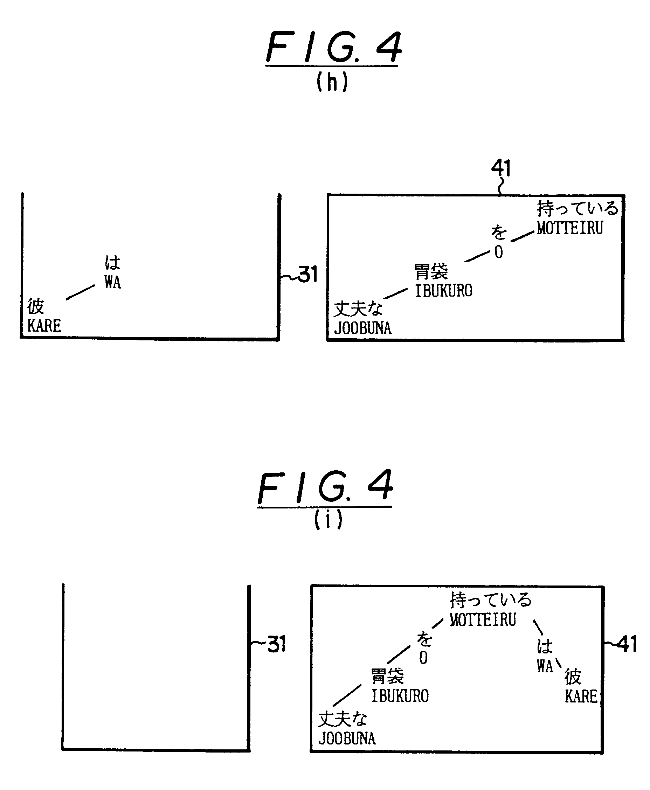

Secondly, in structure analysis processing, a local tree diagram as shown in Fig.4(a) is formed with respect to the two words found to have a modifying relation. The processing as described above is performed in a buffer 41.

Thirdly, then, the formed local tree diagrams are sequentially stored onto a stack 31. Since, for example, a modification is found between the above described "kare" and "wa" and a local tree diagram "kare-wa" is formed, it is fed onto the stack 31 as shown in Fig.4(b). Next, noticing "wa" and "joobuna", since no modification is found, "joobuna" is stored onto the stack 31 as shown in Fig.4(c). A LIFO-type stack is used as the stack 31. Thereafter, for each combination of words found to have a modificatory relation, a local tree diagram is formed in a similar manner and is fed onto the stack 31 as shown in Fig.4(d) to Fig.5(d).

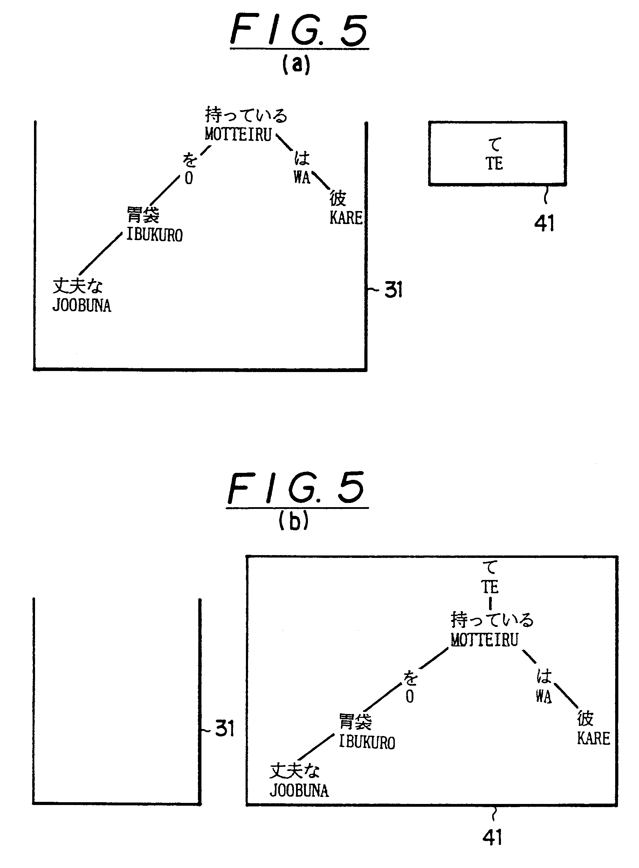

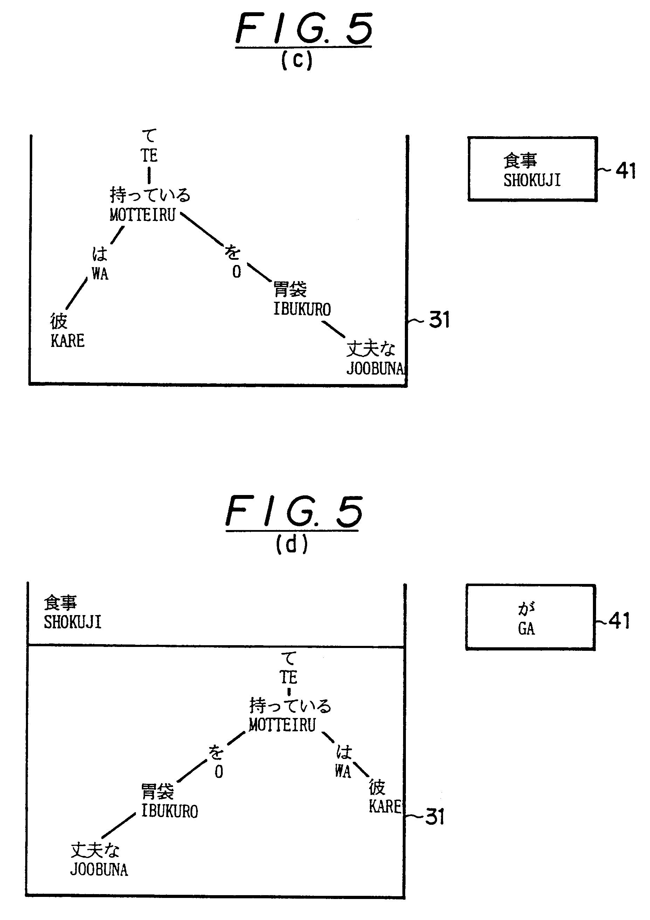

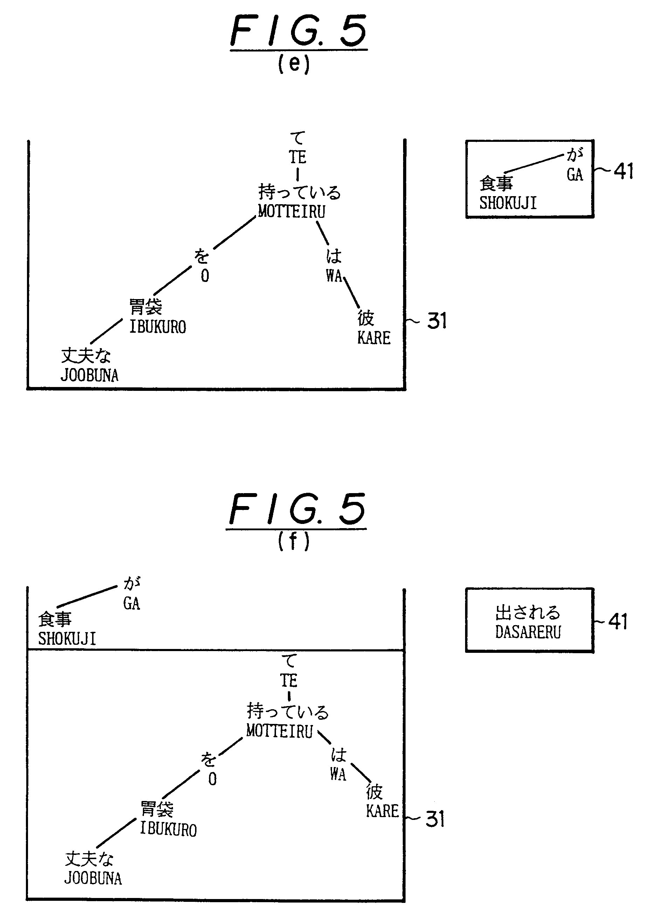

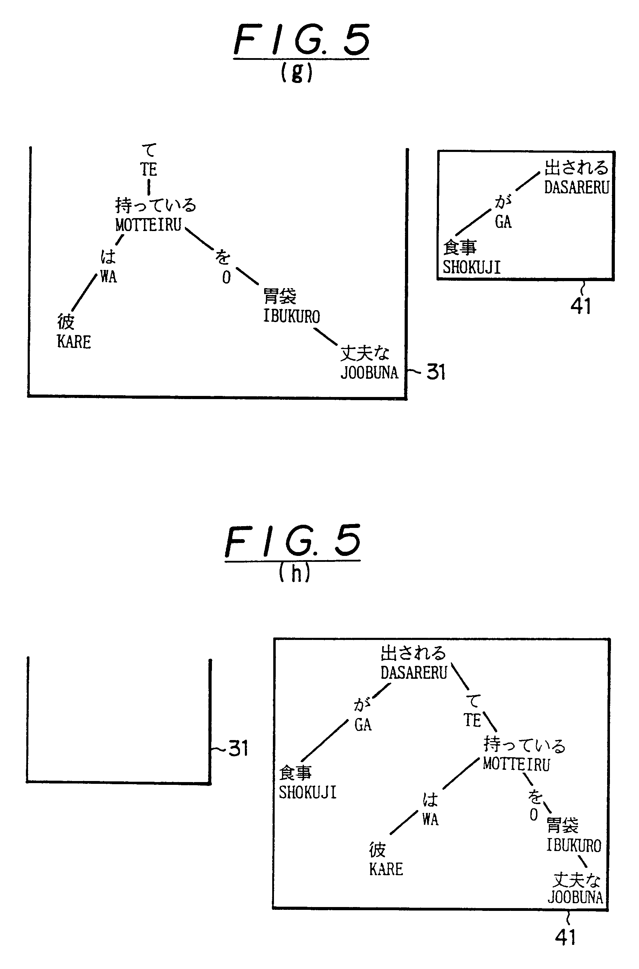

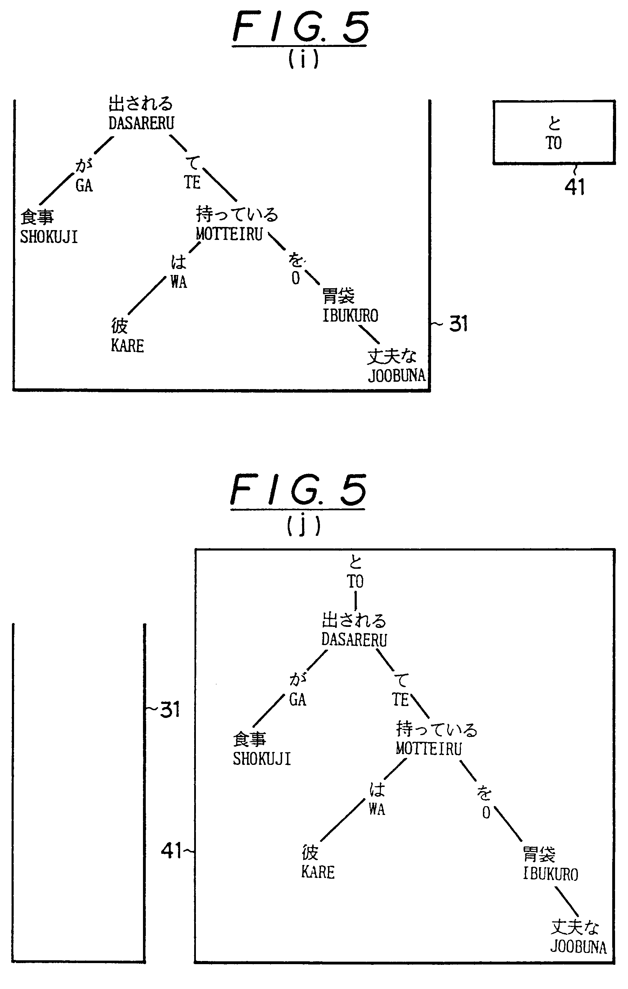

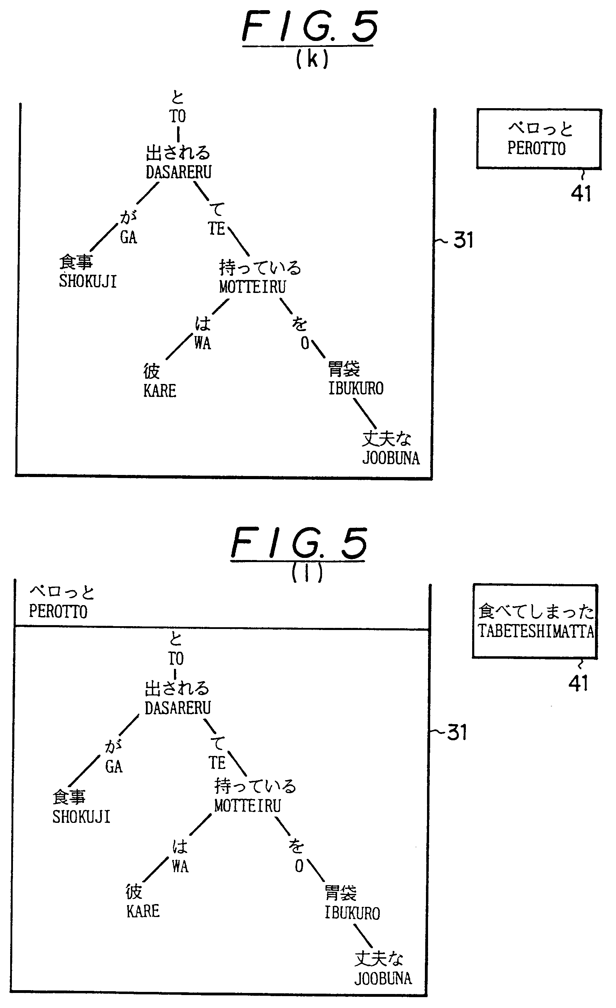

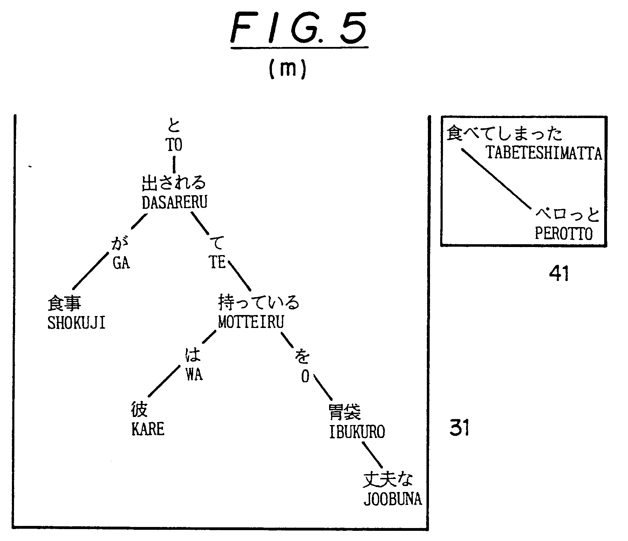

Here, with respect to the justification of the modificand of the conjunctive particles and case particles "wa", "ga", "niwa", "dewa", a final judgment is to be made by way of an analysis by the global structure analysis unit 4 after the analysis by the local structure analysis unit 3. Referring to Fig.5(g), for example, a modification is found between conjunctive particle "te" and verb "dasareru" according to the local structure analysis which uses only the information given to each word, and a local tree diagram as shown in Fig.5(h) is formed.

On the other hand, in Fig.5(m), when the conjunctive particle "to" is to modify the verb "tabeteshimatta", the sentence structure of the local tree diagram following "to" and "tabeteshimatta" together fall under the first pattern of the patterns of Japanese language complex sentence as described above, and it is subjected to the analytical processing by the global structure analysis unit 4 using the structural feature of Japanese sentences.

Here, a modificatory relation is determined by focusing on the conjunctive particles "te", "to" and verb "tabeteshimatta". In this particular case, based on the characteristic existing between the conjunctive particles "te" and "to" with respect to modifying-modified relation, the modificand of "te" depends on the community of the verbs "motteiru", "dasareru", "tabeteshimatta" to a subject, and "te" modifies a verb occurring later having a common subject. Thus, by comparing the respective subjects of the verbs "motteiru", "dasareru", and "tabeteshimatta", "kare" becomes the subject for both "motteiru" and "tabeteshimatta". Thus, the modificatory connection between the conjunctive particle "te" and the verb "dasareru" is disconnected and the local analyzing tree following "te" is fed onto the stack 31.

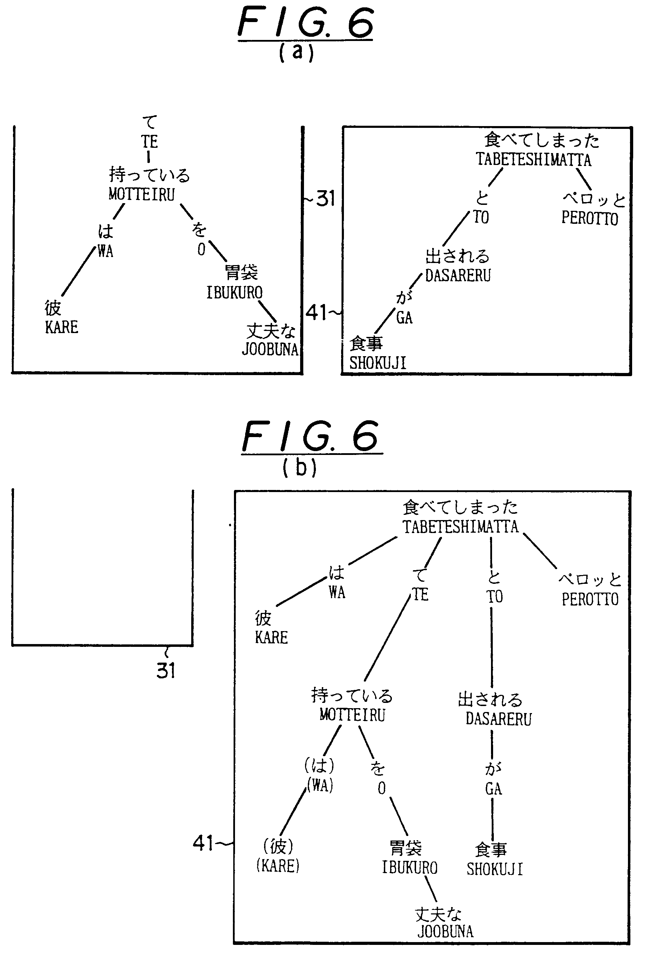

Upon the completion of the processing in the global structure analysis unit 4 as described above, processing returns to the local structure analysis unit 3, where "to" is attached to "tabeteshimatta". As a result, a local analyzing tree as shown in Fig.6(a) is formed.

Finally, the local analyzing tree of the conjunctive particle "te" and downward is attached to "tabeteshimatta" on the basis of local structure analysis to form a tree diagram as shown in Fig.6(b). Thus, analytical processing with respect to this exemplary sentence is terminated.

It should be noted that, in the above described analytical example, if the portion "kare-wa-motteiru-te-dasareru" is noticed of the local analyzing tree within a buffer 41 as shown in Fig.5(h), it falls under the third pattern of Japanese complex sentence as described above. Similarly, the portion "shokuji-ga-dasareru-to-tabeteshimatta" of the local analyzing tree within the buffer 41 as shown in Fig.6(a) and the portion "kare-wa-motteiru-te-tabeteshimatta" in the buffer 41 as shown in Fig.6(b) respectively fall under the third pattern of Japanese complex sentence.

Accordingly, the modificand of the case particles "wa", "ga" are to be corrected, as required, by analytical processing by the global structure analysis unit 4. Since, however, analytical processing of a Japanese complex sentence of the third pattern will be described later (see the fifth and sixth examples of analytical processing), the description thereof at this point is omitted.

### (Second Example of Analytical Processing)

In a second processing example, a description will be given to a case where a Japanese complex sentence "Kare wa jishakabu ga ne o ageru to suguni sore o utteshimatta." is analytically processed. In the same way as in the first analytical processing example, this exemplary sentence also falls under the first pattern of Japanese complex sentence.

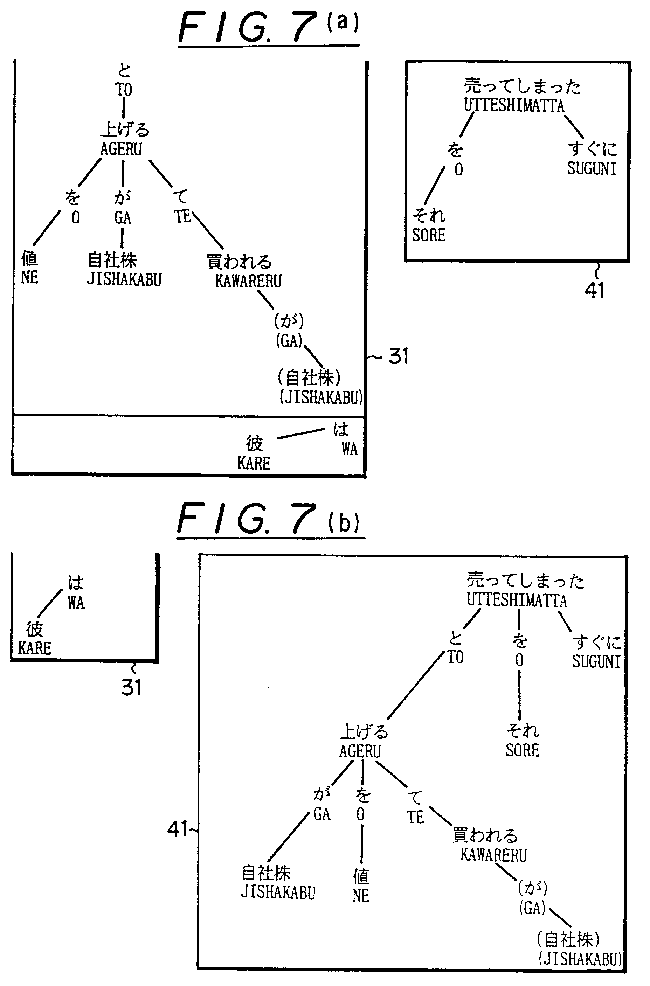

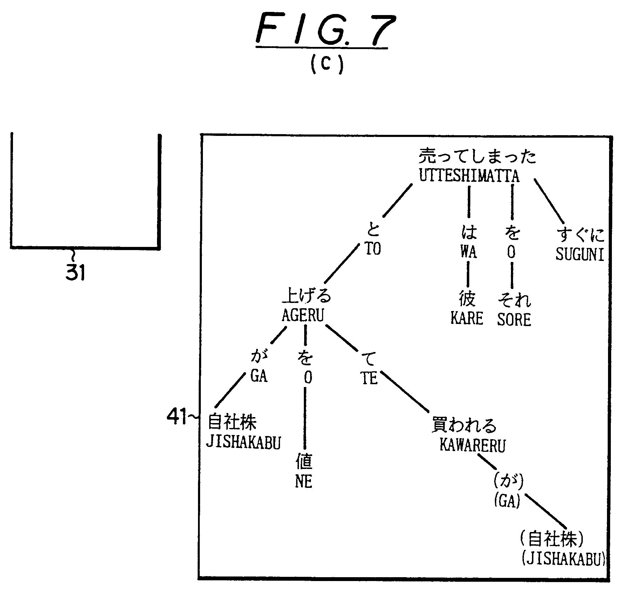

Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.7(a).

The sentence represented by the local analyzing tree in the figure falls under the first pattern among the patterns of Japanese complex sentence as described above and is subjected to analytical processing by the global structure analysis unit 4.

Here, modifying-modified relation is determined by noticing the conjunctive particles "te", "to" and the verb "utteshimatta". In this particular case, based on the characteristic existing between the conjunctive particles "te" and "to" with respect to modifying-modified relation, the modificand of "te" depends on compatibility of the predicates, and "te" modifies predicate occurring later having a common subject. Thus, by comparing the respective subjects of the verbs "kawareru", "ageru", and "utteshimatta", both "kawareru" and "ageru" can take "jishakabu" as their subject. On the other hand, "utteshimatta" cannot have "jishakabu" as its subject. Thus, it is judged that "ageru" is suitable as the modificand of "te" and the modificatory relation thereof is left as it is.

In the first place, "kare wa" is caused to put on "utteshimatta" on the basis of local structure analytical processing to form a tree diagram as shown in Fig.7(c) and the analytical processing with respect to this exemplary sentence is terminated.

Here, in making a comparison between the first analytical processing example and the second analytical processing example by noticing the modificand of the conjunctive particle "te", the respective positions of the verbs modified by the conjunctive particle "te" are different in the respective exemplary sentences while they have the same sentence pattern. Even in such a case, modifying-modified structure of clause or phrase may be properly determined according to the Japanese language structure analyzing system of the present invention.

### (Third Example of Analytical Processing)

In a third processing example, a description will be given to a case where a Japanese complex sentence "Kare wa honya ni itte chuumonshita hon o uketotta." is analytically processed. This exemplary sentence falls under the second pattern of the patterns of Japanese complex sentence as described above.

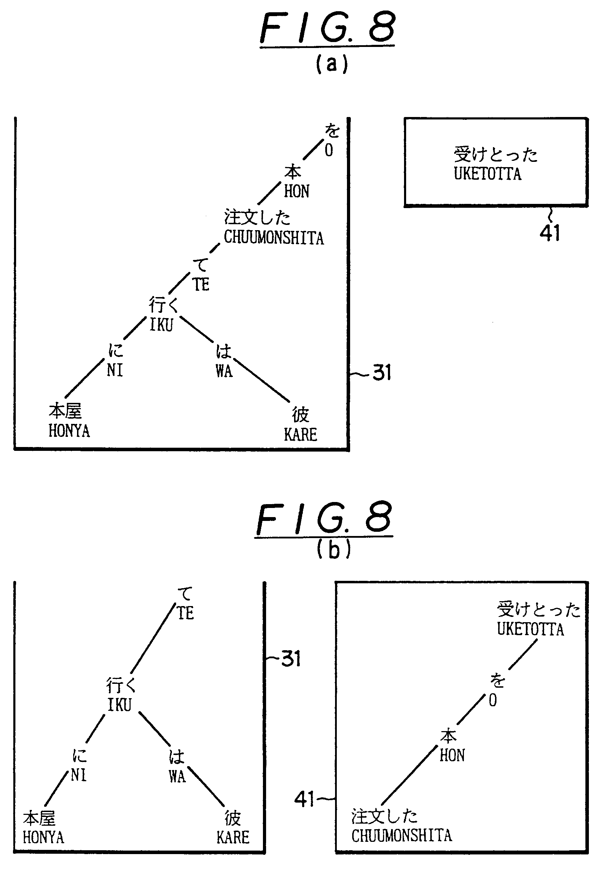

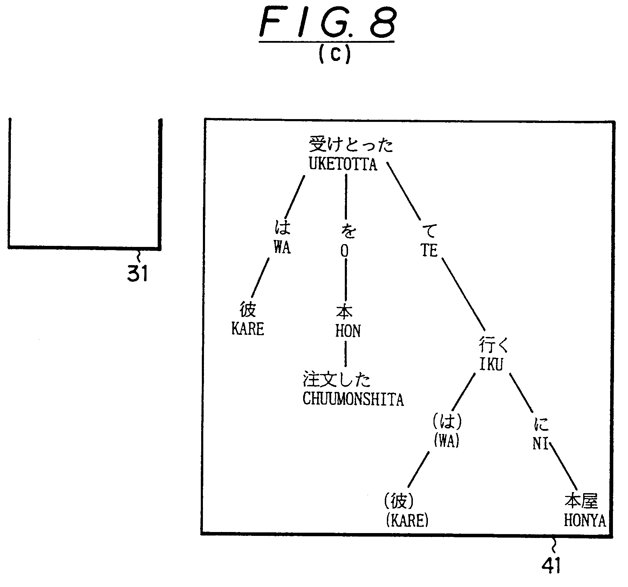

Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.8(a).

The sentence represented by the local analyzing tree in the figure falls under the second pattern among the patterns of Japanese complex sentence as described above and is subjected to analytical processing by the global structure analysis unit 4. Here, it is determined which one of "chuumonshita" and "uketotta" is modified by the conjunctive particle "te" when putting on the case particle "o" over the verb "uketotta".

In the first place, a conclusion that the conjunctive particle "te" cannot modify "chuumonshita" is obtained on the basis of the fact that the substantive-modifying clause modifying the noun "hon" is an accusative case substantive-modifying clause (a substantive-modifying clause of which the case relation between the substantive-modifying clause and the modified noun is of an accusative case) and that the verb "iku" which modifies "te" is modified by "wa".

Incidentally, if a subject exists in the subordinate clause which may or may not modify the predicate in a substantive-modifying clause by way of conjunctive particle "te", it is judged that the conjunctive particle hardly modifies a substantive-modifying clause of subjective case and that, for substantive-modifying clause other than of the subjective case, the modificatory relation is to be determined by other rules. Further, if the subjective case particle in the subordinate clause is "wa", it is judged that the conjunctive clause "te" cannot modify what is included within the substantive-modifying clause. If the subjective case particle is not "wa", it is judged that the modificatory relation is to be determined by other rules.

On the basis of what has been described, of the local analyzing tree modifying the case particle "o" on the stack 31, "te" and "iku" are separated from each other and the portion "te" and downward is fed into the stack 31. Then, "o" is put on the verb "uketotta" on the basis of processing at the local structure analysis unit 3 to form a local analyzing tree as shown in Fig.8(b).

Finally, the local analyzing tree of "te" and downward is put on "uketotta" on the basis of local structure analytical processing to form a tree diagram as shown in Fig.8(c) and the analytical processing with respect to this exemplary sentence is terminated.

### (Fourth Example of Analytical Processing)

In a fourth processing example, a description will be given to a case where a Japanese complex sentence "Kare ga Maruzen ni itte katta hon o watashi ga nakushita." is analytically processed. This exemplary sentence falls under the second pattern of Japanese complex sentence as in the third processing example.

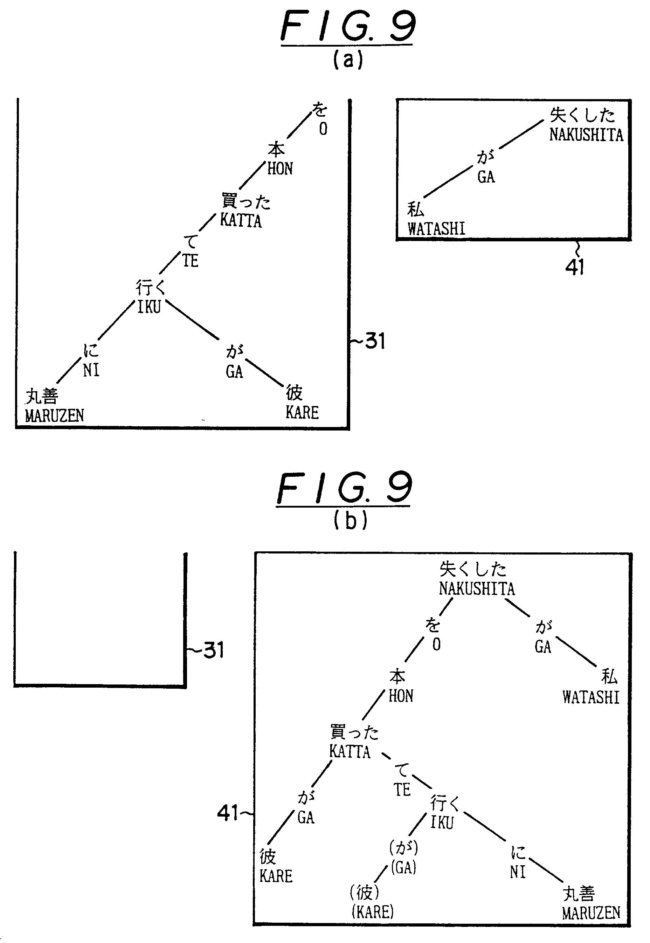

Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.9(a).

The sentence represented by the local analyzing tree in the figure falls under the second pattern among the patterns of Japanese complex sentence as described above and is subjected to analytical processing by the global structure analysis unit 4. Here, it is determined which one of the verbs "katta" and "nakushita" is modified by the conjunctive particle "te" when putting on the case particle "o" over the verb "nakushita".

In the first place, which one of "Katta" and "nakushita" is to be modified by "te" cannot be determined from the fact that the substantive-modifying clause modifying the noun "hon" is an accusative case substantive-modifying clause and the fact that the verb "iku" which modifies "te" is not modified by "wa". Thus, the sharability of modified noun by the substantive-modifying clause and the community of the subject of the verbs "iku", "katta", "nakushita" are furthermore examined sequentially.

Here, the sharability of modified noun by the substantive-modifying clause refer to whether a subordinate clause occurring earlier in the sentence than the noticed substantive-modifying clause and possibly modifying what is within the substantive-modifying clause by way of a conjunctive particle is able to form a substantive-modifying clause in a form modifying the same noun. If it may be formed, it is said that the modified noun is shared by the substantive-modifying clause. Such subordinate clause may be classified into those possibly modifying predicate within the substantive-modifying clause by way of a conjunctive particle and those possibly modifying superficially without a conjunctive particle such as in "unyochushiho". The latter case is also considered in a similar manner.

If the modified noun by the substantive-modifying clause is shared, it is judged that the conjunctive particle "te" is able to modify the predicate in the substantive-modifying clause, while, if it is not shared, it is judged that modificatory relation of "te" is determined by the community of the subject.

In this example, therefore, since the modified noun by the substantive-modifying clause cannot be shared (that is, a sentence "kare ga Maruzen ni iku hon" is impossible), the judgement on the modificand of "te" depends on the community of the subject of the verbs and "te" modifies a verb having a common subject and occurring later.

Since, by examining the community of subject of the verbs, "kare ga" is the common subject of "iku" and "katta" and "kare ga" cannot modify "nakushita" and does not agree because it is already modified by "watashi ga" as a subject. Since it is thus found that "te" modifies "katta" and does not modify "nakushita", "te" is left as it is put on "katta".

Based on processing as described above, a tree diagram as shown in Fig.9(b) is formed and the analytical processing with respect to this exemplary sentence is terminated. Here, in making a comparison between the third analytical processing example and the fourth analytical processing example by noticing the conjunctive particle "te", the respective positions of the verbs modified by the conjunctive particle "te" are different in the respective exemplary sentences while they have the same sentence pattern. Even in such a case, modifying-modified structure of clause or phrase may be properly determined according to the Japanese language structure analyzing system of the present invention.

### (Fifth Example of Analytical Processing)

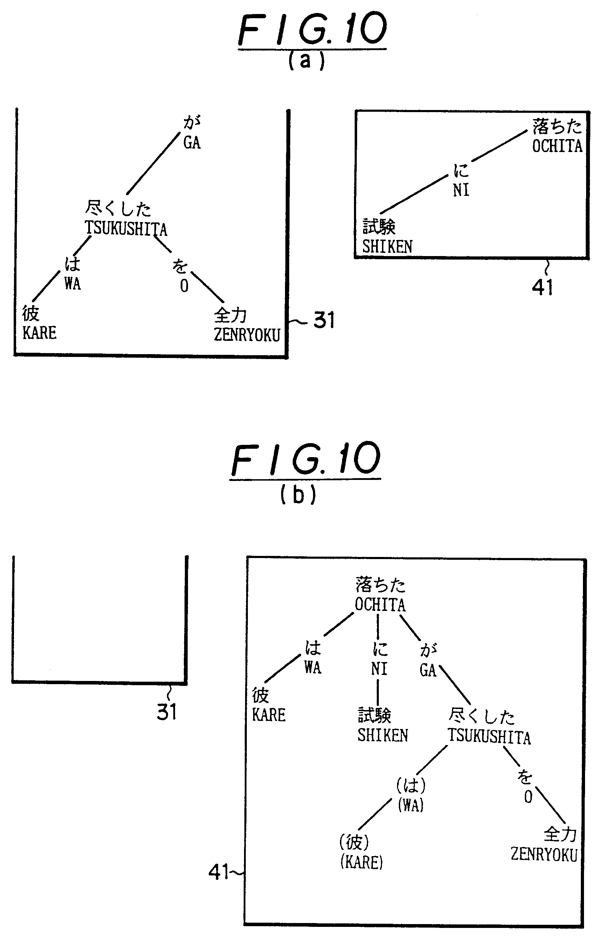

In a fifth processing example, a description will be given to a case where a Japanese complex sentence "Kare wa zenryoku o tsukushita ga shiken ni ochita." is analytically processed. This exemplary sentence falls under the third pattern of the patterns of Japanese complex sentence as described above. Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.10(a).

The sentence represented by the local analyzing tree in this figure falls under the third pattern of Japanese complex sentence and is subjected to analytical processing by the global structure analysis unit 4. Here, it is determined which one of "tsukushita" and "ochita" is modified by the subjective case particle "wa" when the verb "ochita" is to be modified by the conjunctive particle "ga".

To judge this modifying-modified relation, the combination of the subjective case particle "wa" and the conjunctive particle "ga", and the community of subject of the verbs "tsukushita" and "ochita" are sequentially examined. Since, in this case, it cannot be determined only from the combination of "wa" and "ga" whether "wa" modifies a verb that precedes "ga" or it modifies a verb that occurs later beyond "ga", judgment on the modificand of "wa" depends on the community of subject of the verbs and "wa" modifies a verb having a common subject and occurring later.

Incidentally, for the combination of subjective case particle "wa" and a certain type of conjunctive particle, it is judged that "wa" cannot modify, without exception, the predicate immediately preceding such conjunctive particle. In the other cases, it is judged that the modificand of "wa" is to be determined by the community of subject.

From the examination with respect to the community of subject of the verbs, it can be seen that both "tsukushita" and "ochita" take "kare" as their subject. Thus, "kare wa" and "tsukushita" are separated from each other.

As described above, processing at the global structure analysis unit 4 is terminated, and the system returns to processing at the local structure analysis unit 3 where "kare wa" is changed in its attaching position to "ochita". However, the fact that "kare wa" has been attached to "tsukushita" is stored in the analyzing tree.

Finally, "ga" is attached to "ochita" by the local structure analysis processing to form a tree diagram as shown in Fig.10(b) and the analytical processing with respect to this exemplary sentence is terminated.

### (Sixth Example of Analytical Processing)

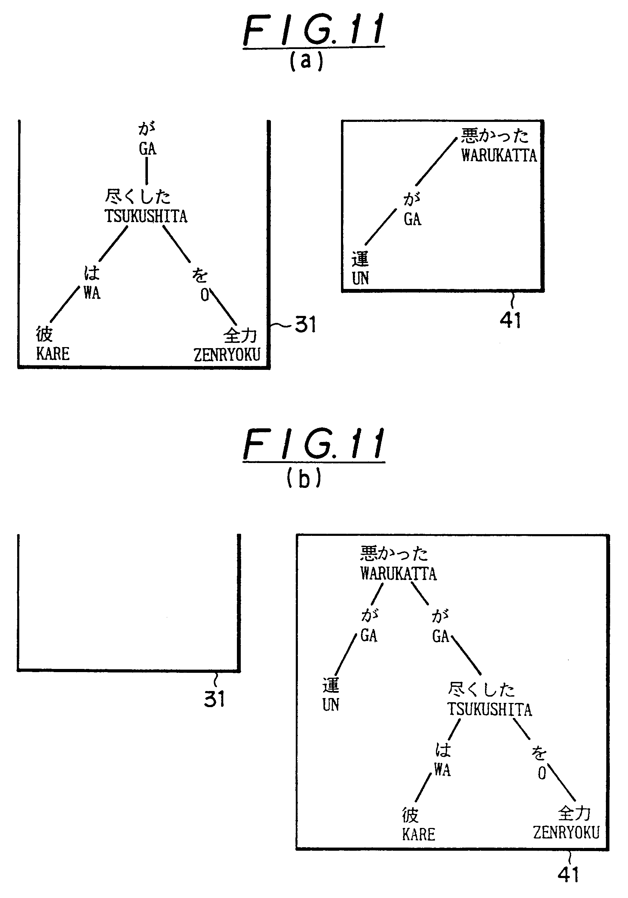

In a sixth processing example, a description will be given to a case where a Japanese complex sentence "Kare wa zenryoku o tsukushita ga un ga warukatta." is analytically processed. This exemplary sentence falls under the third pattern of Japanese complex sentence as in the fifth processing example. Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.11(a).

The sentence represented by the local analyzing tree in this figure falls under the third pattern of Japanese complex sentence and is subjected to analytical processing by the global structure analysis unit 4. Here, it is determined which one of "tsukushita" and "warukatta" is modified by the subjective case particle "wa" when adjective "warukatta" is to be modified by the conjunctive particle "ga" in "tsukushita ga".

To judge this modifying-modified relation, the combination of the subjective case particle "wa" and the conjunctive particle "ga", and the community of subject of the verbs "tsukushita" and "warukatta" are sequentially examined. Since, in this case, it cannot be determined only from the combination of "wa" and "ga" whether "wa" modifies a verb that precedes "ga" or it modifies an adjective that occurs later beyond "ga", judgment on the modificand of "wa" depends on the community of subject of the predicates and "wa" modifies a predicate having a common subject and occurring later.

When the community of subject of the predicates is examined, since, while the subject of "tsukushita" is "kare", "warukatta" is already modified by "un" serving as the subject, "kare" cannot be the subject thereof and the subjects of the predicates do not agree. Thus, processing at the global structure analysis unit 4 is terminated where "kare wa" is left to be attached to "tsukushita".

Finally, "ga" in "tsukushita ga" is attached to "warukatta" by the local structure analysis unit 3 to form a tree diagram as shown in Fig.11(b) and the analytical processing with respect to this exemplary sentence is terminated.

Here, in making a comparison between the fifth analytical processing example and the sixth analytical processing example by noticing the subjective case particle "ga", the respective positions of the verbs modified by the the subjective case particle "ga" are different in the respective exemplary sentences while they have the same sentence pattern. Even in such a case, modifying-modified structure of clause or phrase may be properly determined according to the Japanese language structure analyzing system of the present invention.

### (Seventh Example of Analytical Processing)

In a seventh processing example, a description will be given to a case where a Japanese complex sentence "Eeshakabu ga sakujitsu tsuketa nenshoraitakane o kyoo hutatabi koshinshita." is analytically processed. This exemplary sentence falls under the fourth pattern of the patterns of Japanese complex sentence as described above.

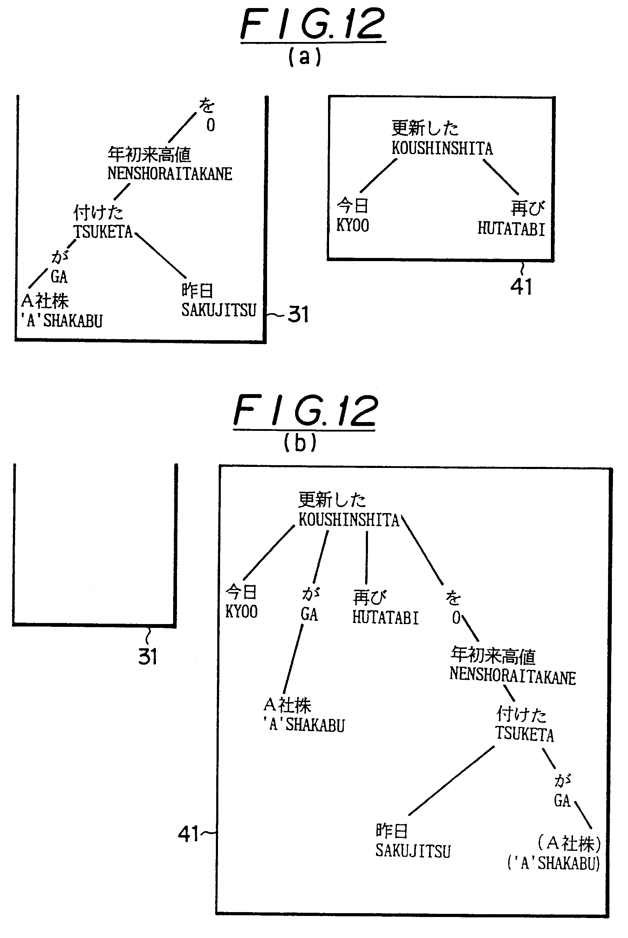

Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.12(a).

The sentence represented by the local analyzing tree in this figure falls under the fourth pattern of Japanese complex sentence and is subjected to analytical processing by the global structure analysis unit 4. Here, it is determined which one of "tsuketa" and "koshinshita"is modified by the subjective case particle "ga" when verb "koshinshita" is to be modified by the case particle "o".

To judge this modifying-modified relation, characteristics, pertinent to the modifying-modified relation, existing between the subjective case particle "ga" and a substantive-modifying clause (such as whether it can modify a predicate occurring later beyond the substantive-modifying clause), and the community of subject of verbs "tsuketa" and "koshinshita" are sequentially examined. Since, in this example, the substantive-modifying clause is not a subjective case substantive-modifying clause (a substantive-modifying clause of which the case relation between the substantive-modifying clause and the noun modified by it is of a subject case), judgment on the modificand of "ga" depends on the community of subject of the verbs and "ga" modifies a verb having a common subject and occurring later.

From the examination with respect to the community of subject of the verbs, it can be seen that both "tsuketa" and "koshinshita" take "eeshakabu" as their subject, and thus "eeshakabu ga" and "tsuketa" are separated from each other.

As described above, processing at the global structure analysis unit 4 is terminated, and the system returns to processing at the local structure analysis unit 3 where "eeshakabu ga" is changed in its attaching position to "koshinshita". However, the fact that "eeshakabu ga" has been attached to "tsuketa" is stored in the analyzing tree.

Finally, "o" is attached to "koshinshita" by the local structure analysis processing to form a tree diagram as shown in Fig.12(b) and the analytical processing with respect to this exemplary sentence is terminated.

### (Eighth Example of Analytical Processing)

In an eighth processing example, a description will be given to a case where a Japanese complex sentence "Eeshakabu ga sakujitsu tsuketa takane o biishakabu ga nuita." is analytically processed. This exemplary sentence falls under the fourth pattern of Japanese complex sentence as in the seventh processing example.

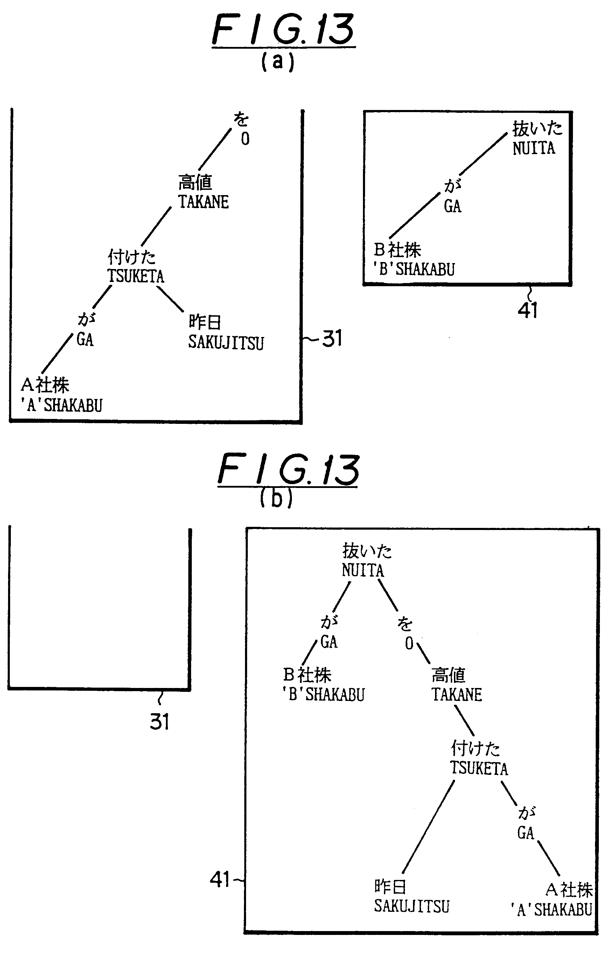

Firstly, the above exemplary sentence is broken down word by word by the morphemic analytical processing at the morpheme analysis unit 1, and, for each word, determination of modifying-modified relation and formation of local tree diagram are performed at the local structure analysis unit 3. Since the above described processing is similar to that in the first analytical processing example, description thereof is omitted and, here, a description will be given with respect to processing after a local analyzing tree has been formed as shown in Fig.13(a).

The sentence represented by the local analyzing tree in this figure falls under the fourth pattern of Japanese complex sentence and is subjected to analytical processing by the global structure analysis unit 4. Here, it is determined which one of "tsuketa" and "nuita"is modified by the subjective case particle "ga" in "eeshakabu ga" when verb "nuita" is to be modified by the case particle "o".

To judge this modifying-modified relation, characteristics, pertinent to the modifying-modified relation, existing between the subjective case particle "ga" and a substantive-modifying clause (such as whether it can modify a predicate occurring later beyond the substantive-modifying clause), and the community of subject of verbs "tsuketa" and "nuita" are sequentially examined. Since, in this example, the substantive-modifying clause is not a subjective case substantive-modifying clause, judgment on the modificand of "ga" in "eeshakabu ga" depends on the community of subject of the verbs and "ga" modifies a verb having a common subject and occurring later.

When the community of subject of the verbs is examined, since, while the subject of "tsuketa" is "eeshakabu", "nuita" is already modified by "biishakabu" serving as the subject, "eeshakabu" cannot be the subject thereof and the subjects of the predicates do not agree. Thus, processing at the global structure analysis unit 4 is terminated where "eeshakabu ga" is left to be attached to "tsuketa".

Finally, "o" is attached to "nuita" by the local structure analysis unit 3 to form a tree diagram as shown in Fig.13(b) and the analytical processing with respect to this exemplary sentence is terminated.

Here, in making a comparison between the seventh analytical processing example and the eighth analytical processing example by noticing the subjective case particle "ga", the respective positions of the verbs modified by the the subjective case particle "ga" are different in the respective exemplary sentences while they have the same sentence pattern. Even in such a case, modifying-modified structure of clause or phrase may be properly determined according to the Japanese language structure analyzing system of the present invention.

While a description has been given with respect to analytical processing according to the present embodiment using two exemplary sentences for each of the four patterns of Japanese complex sentence, analyzing rules in processing of the global structure analysis unit 4 is not limited to those described above and it is possible to provide various rules in accordance with types of particles or the construction of Japanese sentence.

Further, what is to be processed by the global structure analytical processing is not limited to the above described four patterns of Japanese sentences. That is, when a plurality of words, which may be structurally and semantically modified by a certain word, occur later than said certain word in a Japanese sentence and at the same time when it is uncertain whether it modifies the nearest word, it may be subjected as necessary to the global structural analytical processing.

Naturally, in such a case, it is necessary to provide analyzing rules, corresponding to the Japanese sentence to be analyzed, based on the structural feature thereof.

## Claims

1. A system for syntax analysis of Japanese language receiving a Japanese sentence processed with morpheme analysis processing, for performing syntax analysis to judge modifying-modified structure of said Japanese sentence, said system for syntax analysis of Japanese language comprising: a local syntax analysis unit for forming an analyzing tree representing the modifying-modified relation between the words by judging the modifying-modified relation between the words in accordance with predetermined analyzing rules using syntactic information and semantic information obtained from said morpheme analysis processing; and
a global syntax analysis unit for correcting said analyzing tree, as necessary, when the Japanese sentence represented by the analyzing tree formed by said local syntax analysis unit is a complex sentence, by judging in accordance with predetermined analyzing rules based on syntactic information and semantic information of the words and structural feature of the Japanese sentence with respect to justification of the modificand of a conjunctive particle and "wa", "ga", "niwa", "dewa" that follows a noun among the modifying-modified relations between the words determined by said local syntax analysis unit.

2. A system for syntax analysis of Japanese language according to claim 1, wherein the global syntactic analysis unit judges the justification of the modificand of each conjunctive particle and "wa", "ga", "niwa", dewa" that follows a noun on the basis of syntactic information and semantic information of the words of said Japanese sentence and structural feature of the Japanese sentence and corrects, if necessary, said analyzing tree when the Japanese sentence represented by the analyzing tree representing the modifying-modified relation, formed by the local syntax analysis unit falls under one of the following four patterns: (1) a complex sentence having at least two subordinate clauses that are connected by conjunctive particle; (2) a complex sentence having a substantive-modifying clause occurring later than a conjunctive particle; (3) a complex sentence having a plurality of clauses, other than substantive-modifying clause, occurring later than "wa", "ga", "niwa", "dewa" that follows a noun; and (4) a complex sentence having a substantive-modifying clause occurring later than "wa", "ga", "niwa", "dewa" that follows a noun.

3. A system for syntax analysis of Japanese language according to claim 2, wherein the global syntax analysis unit determines, for a Japanese sentence having at least two subordinate clauses connected by a conjunctive particle, the modificand of the conjunctive particle in said Japanese sentence on the basis of type of conjunctive particle or of the community of subject for the predicates.

4. A system for syntax analysis of Japanese language according to claim 2, wherein the global syntax analysis unit determines, for a Japanese sentence having a substantive-modifying clause occurring later than a conjunctive particle, the modificand of the conjunctive particle in said Japanese sentence on the basis of type of the conjunctive particle, type of the substantive-modifying clause, type of case particle modifying pertinent predicate, sharability of the noun to be modified by the substantive-modifying clause, or the community of the subject for the predicates.

5. A system for syntax analysis of Japanese language according to claim 2, wherein the global syntax analysis unit determines, for a Japanese sentence having at least two subordinate clauses connected by conjunctive particle, the modificand of the conjunctive particle in said Japanese sentence on the basis of type of conjunctive particle or the community of subject for the predicates, and determines, for a Japanese sentence having a substantive-modifying clause occurring later than a conjunctive particle, the modificand of the conjunctive particle in said Japanese sentence on the basis of type of the conjunctive particle, type of the substantive-modifying clause, type of case particle modifying pertinent predicate, the sharability of the noun to be modified by the substantive-modifying clause, or the community of subject for the predicates.

6. A system for syntax analysis of Japanese language according to claim 2, wherein the global syntax analysis unit determines, for a Japanese sentence having a plurality of clauses other than substantive-modifying clause occurring later than "wa", "ga", "niwa", "dewa" that follows a noun, the modificand of said "wa", "ga", "niwa", "dewa" in said Japanese sentence on the basis of type of particle that follows said noun, type of conjunctive particle, or the community of subject for the predicates.

7. A system for syntax analysis of Japanese language according to claim 2, wherein the global syntax analysis unit determines, for a Japanese sentence having at least two subordinate clauses connected by conjunctive particle, the modificand of the conjunctive particle in said Japanese sentence on the basis of type of the conjunctive particle or the community of subject for the predicates, and determines, for a Japanese sentence having a plurality of clauses other than substantive-modifying clause occurring later than "wa", "ga", "niwa", "dewa" that follows a noun, the modificand of said "wa", "ga", "niwa", "dewa" in the Japanese sentence on the basis of type of the particle that follows said noun, type of conjunctive particle, or the community of subject for the predicates.

8. A system for syntax analysis of Japanese language according to claim 2, wherein the global syntax analysis unit determines, for a Japanese sentence having a substantive-modifying clause occurring later than a conjunctive particle, the modificand of the conjunctive particle in said Japanese sentence on the basis of type of the conjunctive particle, type of the substantive-modifying clause, type of case particle modifying pertinent predicate, the sharability of the noun to be modified by said substantive-modifying clause, or the community of subject for the predicates, and determines, for a Japanese sentence having a plurality of clauses other than substantive clause occurring later than "wa", "ga", "niwa", "dewa" that follows a noun, the modificand of said "wa", "ga", "niwa", "dewa" in said Japanese sentence on the basis of type of particle that follows said noun, type of conjunctive particle, or the community of subject for the predicates.

9. A system for syntax analysis of Japanese language according to claim 2, wherein the global syntax analysis unit determines, for a Japanese sentence having at least two subordinates connected by conjunctive particle, the modificand of the conjunctive particle in said Japanese sentence on the basis of type of the conjunctive particle, or the community of subject for the predicates, and determines, for a Japanese sentence having a substantive-modifying clause occurring later than conjunctive particle, the modificand of the conjunctive particle in said Japanese sentence on the basis of type of the conjunctive particle, type of the substantive-modifying clause, type of case particle modifying pertinent predicate, the sharability of the noun to be modified by said substantive-modifying clause, or the community of subject for the predicates, and determines, for a Japanese sentence having a plurality of clauses other than substantive-modifying clause occurring later than "wa", "ga", "niwa", "dewa" that follows a noun, the modificand of said "wa", "ga", "niwa", "dewa" in said Japanese sentence on the basis of type of particle that follows said noun, type of conjunctive particle, or the community of subject for the predicates.

10. A system for syntax analysis of Japanese language according to any one of claims 2 through 9, wherein the global syntax analysis unit determines, for a Japanese sentence having substantive-modifying clause occurring later than "wa", "ga", "niwa", "dewa" that follows a noun, the modificand of said "wa", "ga", "niwa", "dewa" in said Japanese sentence on the basis of type of particle that follows said noun, type of said substantive-modifying clause, or the community of subject for the predicates.
